# EUROPÄISCHE PATENTSCHRIFT

(11) **EP 0 973 288 B1**
(45) Veröffentlichungstag und Bekanntmachung des Hinweises auf die Patenterteilung: **10.05.2006**
(21) Anmeldenummer: 99440195.8
(22) Anmeldetag: 13.07.1999
(51) Int. Cl.: H04H 1/02, H04N 7/10, H04B 3/36, H04B 10/20, H04J 14/02

(54) **Verbindungsknoten für ein Kabelübertragungsnetzwerk**
Interconnection node for a cable transmission network
Noeud d'interconnection pour un réseau de transmission par câble

(30) Priorität: 16.07.1998 DE 19832039
(43) Veröffentlichungstag der Anmeldung: 19.01.2000
(73) Patentinhaber: ALCATEL, 75008 Paris (FR)
(72) Erfinder: Anhorn, Jürgen G., 70806 Kornwestheim (DE)
(74) Vertreter: Menzietti, Domenico

(56) Entgegenhaltungen:
- EP-A- 0 769 860
- EP-A- 0 847 160
- EP-A- 0 849 915
- US-A- 5 228 105

## Beschreibung

Die Erfindung bezieht sich auf einen Knoten eines Punkt-zu-Mehrpunkt-Netzwerkes gemäß dem Oberbegriff des Patentanspruchs 1.

In Punkt-zu-Mehrpunkt-Netzwerken, wie beispielsweise in einem Kabelverteilnetz mit oder ohne Rückkanal, werden Signale, z.B. Kabelfernsehsignale und/oder Telefonsignale, sog. coblephone, in der Regel von einer Zentrale über zwei separate optische Leitungen derart zu mehreren Knoten übertragen, daß jeder Knoten Signale aus beiden Leitungen empfängt. Jeder Knoten versorgt ein Kooxiolkabelnetz mit einer Vielzahl von Endstellen. Eine derartige Netzstruktur ist aus der Firmenzeitschrift "telcom report" der Firma Siemens AG, Ausgabe 3/1996, Seiten 10 bis 13 bekannt.

Die zwei separaten optischen Leitungen sind vorgesehen, damit bei einer Störung, beispielsweise verursacht durch Leitungsbruch oder nicht ausreichende Verstärkung, einzelne Knoten nicht keine Signale mehr oder nur noch Signale mit verminderter Qualität empfangen. In jedem Knoten werden dazu mittels zweier Detektoren die ankommenden Signale beider Leitungen detektiert und über einen Schalter nur das Signal mit dem höheren Signalpegel weiterleitet.

Nachteilig bei diesen Netzwerken ist, daß stets beide optischen Leitungen mit einem hohen Signalpegel betrieben werden müssen, wodurch viel Leistung verschwendet wird, die das Netzwerk zudem schneller altern läßt.

In dem aus DE 19650088 bekannten Netzwerk laufen zwei mit einer Zentrale verbundene optische Leitungen in einen Schaltaufbau zusammen, der Signale nur weiterleitet, wenn eine Störung auf einer der beiden optischen Leitungen detektiert wird. Dadurch wird eine Reserveleitung nur aktiv geschaltet, wenn eine Störung vorliegt, so daß die Performance des Netzwerkes auf den fehlerfreien Fall optimiert werden kann. Nachteilig ist, daß ein separater Schaltaufbau benötigt wird und die Versorgung von Knoten im Störungsfall von dem Funktionieren des Schaltaufbaus abhängt.

Aus der EP 0847160 A2 ist ein System zur gerichteten Punkt-zu-Mehrpunkt-Informationsübertragung bekannt, bei dem im Fehlerfall ein Schaltaufbau die von einer anderen Übertragungsleitung kommenden Signale auf eine von einem Detektor überwachte weitere Übertragungsleitung umleitet.

Es ist daher eine Aufgabe der Erfindung, ein Netzwerk zu schaffen, bei dem sowohl im fehlerfreien Fall als auch im Falle des Auftretens einer Störung eine optimierte Betriebsweise ermöglicht wird.

Gelöst wird diese Aufgabe durch ein Netzwerk, das aus Knoten gemäß Patentanspruch 1 aufgebaut ist. Der erfindungsgemäße Knoten ist insbesondere dadurch gekennzeichnet, daß er nicht nur Signale empfängt, sondern auch Signale an Nachbarknoten überträgt, und daß er nur einen Detektor beinhaltet, der den Signalempfang aus einer bevorzugte Richtung detektiert und im fehlerfreien Fall einen Schalter derart ansteuert, daß die aus der bevorzugten Richtung empfangenen Signale einem Koaxialkabelnetz und/oder einem in einer bevorzugten Richtung plazierten Nachbarknoten zugeführt werden sowie im Falle einer Störung die aus einer Reserveleitung empfangenen Signale dem Koaxialkabelnetz und/oder einem in Richtung der Störung plazierten Nachbarknoten zugeführt werden, wodurch die Reserveleitung aktiviert wird. Dadurch wird erreicht, daß die Knoten autark und unabhängig von zusätzlichen Steuereinrichtungen, wie beispielsweise einem zentralen Schaltaufbau den Empfang und die Weiterleitung der Signale steuern können und gegebenenfalls die Reserveleitung nur im Falle einer Störung aktiviert wird.

Wird die Reserveleitung nur im Falle einer Störung aktiviert, ist sie im fehlerfreien Fall für andere Übertragungen nutzbar. Beispielsweise kann durch Anordnung von einer Einkoppel- und einer Auskoppelvorrichtung in jedem Knoten die Reserveleitung zusätzlich zur Datenübertragung, z.B. für Daten eines Intranets eines Unternehmens oder sicherheitsinsensitive Daten, z.B. Internet, genutzt werden.

Vorteilhafte Ausgestaltungen sind den abhängigen Patentansprüchen zu entnehmen.

Im folgenden werden drei Ausführungsbeispiele der Erfindung unter Zuhilfenahme der Figuren 1 bis 6 beschrieben. Es zeigen:
- Fig. 1: ein schematische Darstellung eines erfindungsgemäßen Netzwerks,
- Fig. 2: eine schematische Darstellung eines erfindungsgemäßen Netzwerks bei Auftreten einer Störung,
- Fig. 3: einen schematisch dargestellten Aufbau eines ersten erfindungsgemäßen Knotens für das Netzwerk aus Fig.1,
- Fig. 4: einen schematisch dargestellten Aufbau einer bevorzugten Ausführungsform des Knotens aus Fig. 3,
- Fig. 5: einen schematisch dargestellten Aufbau eines zweiten erfindungsgemäßen Knotens für das Netzwerk aus Fig.1 und
- Fig. 6: einen schematisch dargestellten Aufbau eines dritten erfindungsgemäßen Knotens für das Netzwerk aus Fig.1.

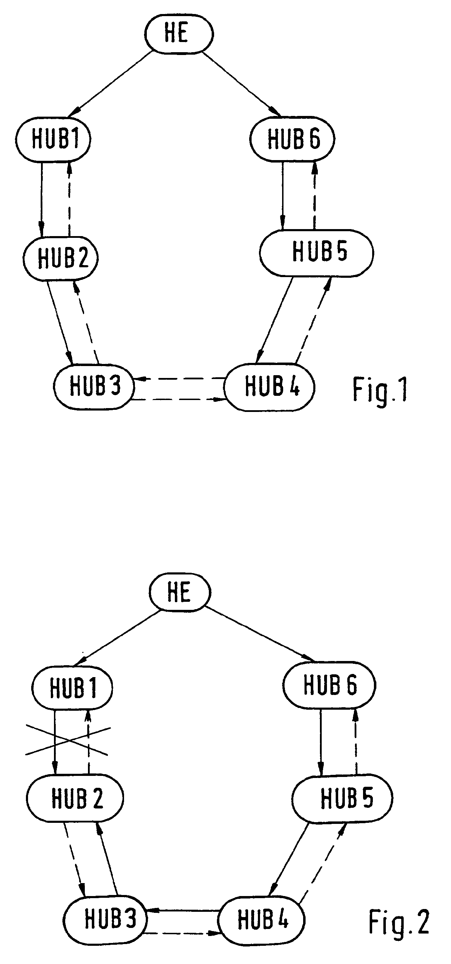

Das erste Ausführungsbeispiel wird nun unter Zuhilfenahme der Figuren 1 bis 4 erläutert. Fig. 1 zeigt ein erfindungsgemäßes Netzwerk NET. Das Netzwerk NET ist als Punkt-zu-Mehrpunkt Netzwerk und insbesondere als unidirektionales Verteilnetz ausgelegt, z.B. für das Verteilen von Kabelfernsehsignalen von einer Zentrale HE zu einer Vielzahl von aus Gründen der Übersichtlichkeit nicht dargestellten Endstellen. Das Netzwerk NET kann auf einfache Art und Weise auch in ein bidirektionales Netzwerk, z.B. mit einem bestehenden Telefonnetz als Rückkanal oder einem zweiten Verteilnetz als Rückkanal umgewandelt werden, wodurch auch Dienste wie beispielsweise cablephone, Service-on-demand, Video-on-demand und/oder dergleichen realisierbar sind. Die Erfindung kann auf unidirektionale und bidirektionale Netzwerke angewendet werden. Aus Gründen der Übersichtlichkeit ist in Fig. 1 ein unidirektionales Verteilnetz gewählt.

Das Netzwerk NET beinhaltet neben der Zentrale HE, die auch als sog. Kopfsstelle oder Head End bezeichnet wird, sechs Knoten HUB1, HUB2, HUB3, HUB4, HUB5, HUB6, die in Serie geschaltet sind. Die Zentrale HE ist mit den beiden Anfangsknoten HUB1 und HUB6 verbunden. Die zwei Anfangsknoten HUB1, HUB6 sind über eine Serienschaltung aus den vier Knoten HUB2, HUB3, HUB4, HUB5 miteinander verbunden.

Signale, z.B. Kabelfernsehsignale werden von der Zentrale HE aus über zwei verschiedene Wege zu den Knoten HUB1, HUB2, HUB3, HUB4, HUB5, HUB6 übertragen, wobei es für drei Knoten HUB1, HUB2, HUB3; HUB4, HUB5, HUB6 jeweils eine Hauptversorgungsleitung und eine Reserveleitung gibt. Die drei Knoten HUB1, HUB2, HUB3 werden von der Zentrale HE über die erste Hauptversorgungsleitung mit Signalen versorgt. Die erste Hauptversorgungsleitung ist mit durchgezogenen Linien gezeichnet. Die drei Knoten HUB4, HUB5, HUB6 werden von der Zentrale HE über die zweite Hauptversorgungsleitung mit Signalen versorgt. Die zweite Hauptversorgungsleitung ist mit durchgezogenen Linien gezeichnet. Die drei Knoten HUB1, HUB2, HUB3 werden vom Knoten HUB4 über die erste Reserveleitung mit Signalen versorgt, wenn auf der ersten Hauptversorgungsleitung zwischen Zentrale HE und Knoten HUB1 eine Störung auftritt. Die erste Reserveleitung ist mit gestrichelten Linien gezeichnet. Die drei Knoten HUB4, HUB5, HUB6 werden vom Knoten HUB3 über die zweite Reserveleitung mit Signalen versorgt, wenn auf der zweiten Hauptversorgungsleitung zwischen Zentrale HE und Knoten HUB6 eine Störung auftritt. Die zweite Reserveleitung ist mit gestrichelten Linien gezeichnet.

An jeden Knoten HUB1, HUB2, HUB3, HUB4, HUB5, HUB6 ist ein aus Gründen der Übersichtlichkeit nicht dargestelltes Koaxialkabelnetz zur Verteilung der Kabelfernsehsignale zu einer Vielzahl von Endstellen angeschlossen.

Die Knoten HUB2, HUB3, HUB4, HUB5 haben jeweils zwei Nachbarknoten, mit denen sie direkt verbunden sind. Die Nachbarknoten von HUB2 sind HUB1 und HUB3, diejenigen von Knoten HUB3 sind HUB2 und HUB4, diejenigen von Knoten HUB4 sind HUB3 und HUB5, diejenigen von Knoten HUB5 sind HUB4 und HUB6.

Die Zentrale HE ist über optische Leitungen, z.B. optische Glasfaserleitungen, mit den zwei Anfangsknoten HUB1, HUB6 verbunden. Die Knoten HUB2, HUB3, HUB4, HUB5 sind über optische Leitungen mit ihren Nachbarknoten HUB1, HUB3; HUB2, HUB4; HUB3, HUB5; HUB4, HUB6 verbunden. In jedem Knoten HUB1, HUB2, HUB3, HUB4, HUB5, HUB6 ist jeweils ein Optisch/Elektrisch-Umsetzer vorhanden, um die empfangenen optischen Signale in elektrische umzusetzen und anschließend über das entsprechende Koaxialkabelnetz weiterzuleiten.

Die Verbindungen zwischen Zentrale HE und den Anfangsknoten HUB1, HUB6 sind unidirektional ausgelegt. Sie können optional auch bidirektional ausgelegt werden, um der Zentrale HE z.B. zu ermöglichen die von ihr ausgesandten Signale, zumindest im Falle einer Störung auf einer Hauptversorgungsleitung, zu empfangen und beispielsweise den Signalpegel zu detektieren und den ausgesandten Signalpegel nachzuregeln, im Falle daß der detektierte Signalpegel zu hoch oder zu niedrig ist.

Jeder der Knoten HUB2, HUB3, HUB4, HUB5 ist geeignet, von seinen beiden Nachbarknoten HUB1, HUB3; HUB2, HUB4; HUB3, HUB5; HUB4, HUB6 mit denen er verbunden ist, Signale über eine Hauptversorgungsleitung und eine Reserveleitung zu empfangen und Signale zu seinen beiden Nachbarknoten HUB1, HUB3; HUB2, HUB4; HUB3, HUB5; HUB4, HUB6 über eine Hauptversorgungsleitung und eine Reserveleitung oder über zwei Reserveleitungen zu übertragen sowie in eine dritte Richtung, z.B. das Koaxialkabelnetz, zu übertragen.

Fig. 2 zeigt das Netzwerk aus Fig. 1 bei Auftreten einer Störung zwischen dem Knoten HUB1 und dem Knoten HUB2. Aufgrund der Störung, z.B. hervorgerufen durch einen Kabelbruch, können Signale nun nicht mehr von Knoten HUB1 zu Knoten HUB2 weitergeleitet werden. Der Knoten HUB2 detektiert, daß er keine Signale oder Signale mit unzureichender Qualität von Knoten HUB1 empfängt und schaltet um, um Signale vom Knoten HUB3 über die erste Reserveleitung zu empfangen. Ebenso detektiert Knoten HUB3, daß er keine Signale oder Signale mit unzureichender Qualität von Knoten HUB2 empfängt und schaltet um, um Signale vom Knoten HUB4 über die erste Reserveleitung zu empfangen. Der Knoten HUB1 wird somit weiterhin über die erste Hauptversorgungsleitung von der Zentrale HE direkt mit Signalen versorgt, während den Knoten HUB2, HUB3, HUB4, HUB5, HUB6 die Signale von der Zentrale HE über die zweite Hauptversorgungsleitung bzw. über die erste Reserveleitung zugeleitet werden, was in Fig. 2 durch die durchgezogenen Linien angedeutet ist.

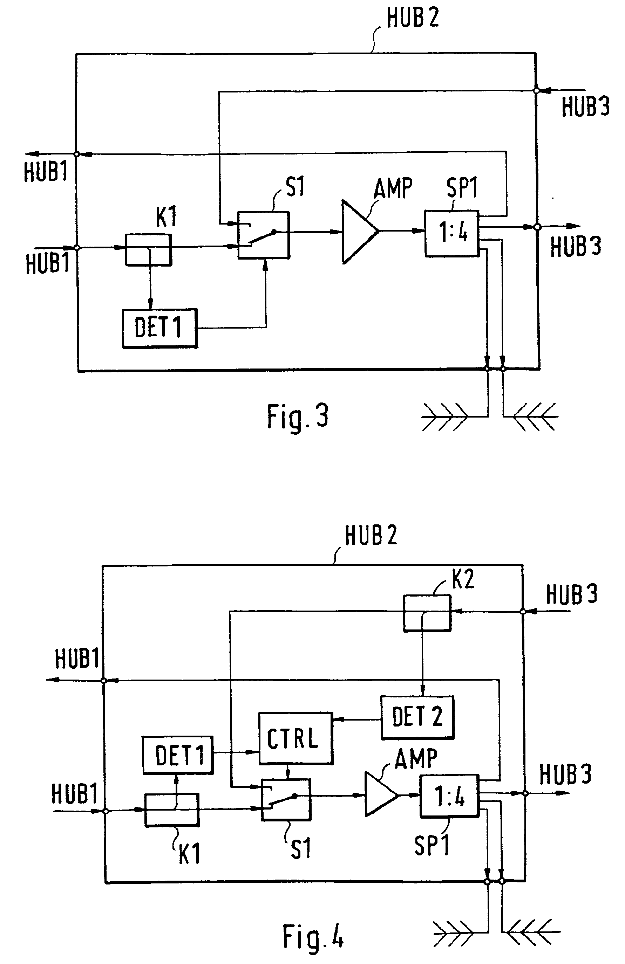

Fig. 3 zeigt nun einen ersten erfindungsgemäßen Knoten für das Netzwerk aus Fig.1. Dargestellt ist Knoten HUB2. Der Aufbau der Knoten HUB3, HUB4, HUB5 ist vergleichbar demjenigen von HUB2. Der Aufbau der Knoten HUB1, HUB6 ist ebenfalls vergleichbar demjenigen von Knoten HUB2 mit dem Unterschied, daß die Verbindung vom jeweiligen Knoten zur Zentrale HE optional ist.

Der Knoten HUB2 beinhaltet einen Detektor DET1, um Störungen in den vom Nachbarknoten HUB1 empfangenen Signalen zu detektieren, und einen durch den Detektor DET1 ansteuerbaren Schalter S1, um die vom Nachbarknoten HUB1 empfangenen Signale zum anderen Nachbarknoten HUB3 und in die dritte Richtung, d.h. zum Koaxialkabelnetz, weiterzuleiten und im Falle einer detektierten Störung in den vom Nachbarknoten HUB1 empfangenen Signalen die vom anderen Nachbarknoten HUB3 empfangenen Signale zum Nachbarknoten und in die dritte Richtung weiterzuleiten.

Der Knoten HUB2 hat einen ersten Eingang zum Empfang von Signalen und einen ersten Ausgang zum Übertragen von Signalen, die mit dem Nachbarknoten HUB1 verbunden sind, sowie einen zweiten Eingang zum Empfang von Signalen und einen zweiten Ausgang zum Übertragen von Signalen, die mit dem Nachbarknoten HUB3 verbunden sind. Der Schalter S1 ist als optischer Schalter ausgeführt. Der erste Eingang ist über eine Serienschaltung aus einem optischen Koppler K1, dem Schalter S1 und einem optischen Splitter SP1 mit dem zweiten Ausgang verbunden. Ein Ausgang des optischen Kopplers K1 liefert das Eingangssignal für den Detektor DET1. Der zweite Eingang ist mit dem Schalter S1 verbunden und der erste Ausgang mit dem optischen Splitter SP1.

In einer bevorzugten Ausführungsform ist zwischen Schalter S1 und optischen Splitter SP ein optischer Verstärker AMP geschaltet ist, um die weiterzuleitenden Signale zu verstärken. Der Knoten HUB2 hat einen dritten und einen vierten Ausgang, um Signale über den dritten Ausgang in die dritte Richtung und über den vierten Ausgang in eine vierte Richtung, beispielsweise in ein weiteres Koaxialkabelnetz oder zu einem weiteren Knoten weiterleiten zu können. Der optische Splitter SP1 ist derart ausgeführt, daß er die verstärkten Signale mindestens zweimal dupliziert, im Ausführungsbeispiel dreimal, wobei jeweils ein Ausgangssignal des optischen Splitters SP1 jeweils einem Ausgang des Knotens HUB2 zugeführt wird. So wird das erste Ausgangssignal des optischen Splitters SP1 an den Knoten HUB1 weitergeleitet, das zweite Ausgangssignal an den Knoten HUB3, das dritte Ausgangssignal in die dritte Richtung und das vierte Ausgangssignal zum vierten Ausgang.

Im fehlerfreien Fall wird somit über den optischen Koppler K1, der beipielsweise 10% des empfangenen Signalpegels auskoppelt und an den Detektor DET1 weiterleitet sowie 90% des empfangenen Signalpegels an den Schalter S1 weiterleitet, und den Detektor DET1, der beispielsweise als Schwellenwertdetektor oder Komparator ausgebildet ist, festgestellt, ob der Pegel der vom Knoten HUB1 empfangenen Signale ausreichend hoch ist, z.B. um alle Endstellen des nachfolgenden Koaxialkabelnetzes zu versorgen. Ist dies der Fall, so wird der Schalter S1 vom Detektor DET1 derart angesteuert, daß die vom Knoten HUB1 empfangenen Signale zum Verstärker AMP weitergeleitet werden. Im Verstärker AMP, der beispielsweise als Erbium dotierter Faserverstärker ausgeführt ist, werden die Signale verstärkt und anschließend zum optischen Splitter SP1 weitergeleitet. Der optische Splitter SP1 ist beispielsweise aus drei 2x2 Kopplern aufgebaut, die baumförmig miteinander verschaltet sind. Damit werden vier Signale generiert. Werden asymmetrische Koppler eingesetzt, so können auch Signale mit unterschiedlichen Signalpegeln generiert werde, um beispielsweise unterschiedlichen Anforderungen gerecht zu werden. Z.B. ist für die Übertragung zu den Nachbarknoten HUB1, HUB3 ein niedrigerer Signalpegel erfoderlich, als für die Übertragung im Koaxialkabelnetz. Die Ausgangssignale des optischen Splitters SP1 werden gegebenenfalls unter Berücksichtigung ihrer angepaßten Signalpegel auf die vier Ausgänge aufgeteilt.

Im Fall, daß der Detektor DET1 eine Störung in den vom Knoten HUB1 empfangenen Signalen detektiert, schaltet er den Schalter S1 um, so daß nun die vom Knoten HUB3 über die Reserveleitung empfangenen Signale zum Verstärker AMP, dem optischen Splitter SP und anschließend zu den vier Ausgängen weitergeleitet werden.

Fig. 4 zeigt eine bevorzugte Ausführungsform des Knotens aus Fig. 3. Der Knoten HUB2 aus Fig. 4 entspricht von seinem Aufbau und seiner Funktionalität dem Knoten aus Fig. 3 mit dem Unterschied, daß er zusätzlich einen weiteren optischen Koppler K2, einen weiteren Detektor DET2 und eine Steuereinheit CTRL beinhaltet. Der optische Koppler K2 ist zwischen den zweiten Eingang des Knotens HUB2 und den Schalter S1 geschaltet ist, damit ein Ausgang des weiteren optischen Kopplers K2 das Eingangssignal für den Detektor DET2 liefert. Der Detektor DET2 ist vorgesehen, um Störungen in den vom Nachbarknoten HUB3 empfangenen Signalen zu detektieren. Die Steuereinheit CTRL ist zwischen die beiden Detektoren DET1, DET2 und den Schalter S1 geschaltet, um in Abhängigkeit von den Ausgangssignalen der Detektoren DET1, DET2 den Schalter S1 nach einer vorgegebenen Schaltmatrix anzusteuern.

Der Koppler K2 ist beispielsweise als asymmetrischer Koppler ausgeführt, der 10% des empfangenen Signalpegels auskoppelt und an den Detektor DET2 weiterleitet sowie 90% des Signalpegels an den Schalter S1 weiterleitet. Der Detektor DET ist beipielsweise als Komparator ausgebildet, um den ihm zugeführten Signalpegel mit einem vorgegebenen zu vergleichen und das Ergebnis der Steuereinheit CTRL zuzuführen. Die Steuereinheit CTRL ist beispielsweise als programmierbarer Logikbaustein, z.B. als FPGA oder als CPLD ausgeführt; FPGA = Field Programmable Gate Array, CPLD = Complex Programmable Logic Device. In die Steuereinheit CTRL ist eine Schaltmatrix programmiert, die im einfachsten Fall folgendes enthält:
1. Detektor DET1 detektiert einen ausreichenden Signalpegel. Unabhängig davon , was Detektor DET2 detektiert, wird der Schalter S1 derart geschaltet, daß die vom Knoten HUB1 empfangenen Signale an den Verstärker AMP weitergeleitet werden.
2. Detektor DET1 detektiert keinen ausreichenden Signalpegel. Detektor DET2 detektiert einen ausreichenden Signalpegel. Schalter S1 wird derart angesteuert, daß die vom Knoten HUB3 empfangenen Signale an den Verstärker AMP weitergeleitet werden.
3. Detektor DET1 detektiert keinen ausreichenden Signalpegel. Detektor DET2 detektiert keinen ausreichenden Signalpegel. Schalter S1 wird derart angesteuert, daß die vom Knoten HUB1 empfangenen Signale an den Verstärker AMP weitergeleitet werden können.

Durch diese Programmierung ist eine bevorzugte Empfangsrichtung, nämlich von Knoten HUB1 implementiert. In der Regel wird die Entfernung von der Zentrale HE zu Knoten HUB2 über Knoten HUB1 näher sein als über Knoten HUB3, so daß Signale empfangen von Knoten HUB1 einen höheren Signalpegel aufweisen als Signale empfangen von Knoten HUB3. Um auch bei Störungen, die nicht durch einen Kabelbruch verursacht sind, sondern beispielsweise durch eine zu einer Signalpegelminderung führenden Materialermüdung die Signale mit dem höheren Signalpegel detektieren und weiterleiten zu können, kann die Steuereinheit CTRL auch derart programmiert werden, daß die Steuereinheit CTRL stets den höheren der detektierten Signalpegel auswählt und den Schalter derart ansteuert, daß die Signale mit dem höheren Signalpegel an den Verstärker AMP weitergeleitet werden, unabhängig von der Empfangsrichtung.

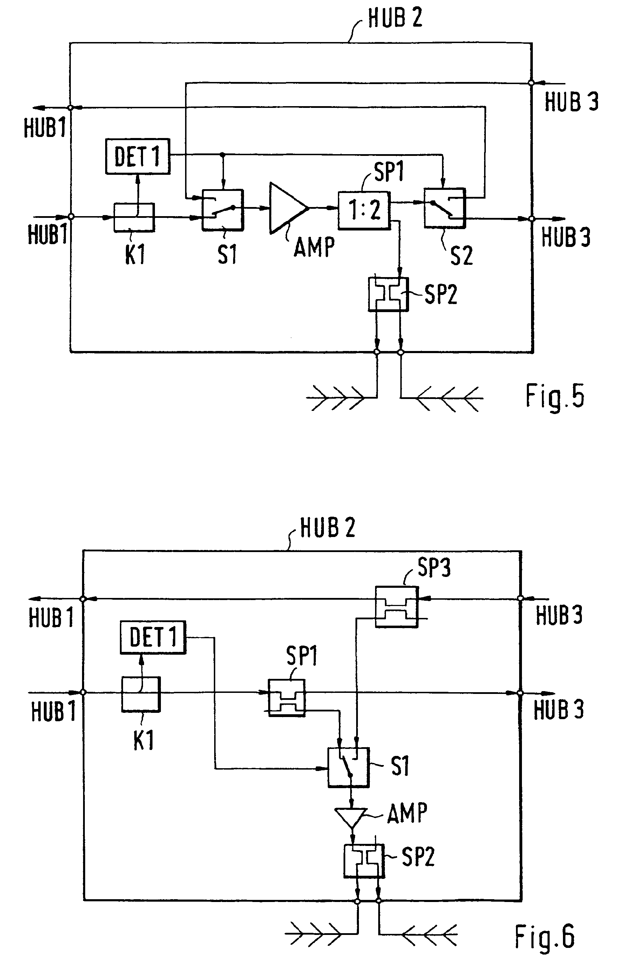

Das zweite Ausführungsbeispiel wird nun unter Zuhilfenahme der Figur 5 erläutert. Fig. 5 zeigt einen erfindungsgemäßen Knoten HUB2 zur Verwendung im Netzwerk aus Fig. 1. Der Aufbau der Knoten HUB3, HUB4, HUB5 ist vergleichbar demjenigen von HUB2. Der Aufbau der Knoten HUB1, HUB6 ist ebenfalls vergleichbar demjenigen von Knoten HUB2 mit dem Unterschied, daß die Verbindung vom jeweiligen Knoten zur Zentrale HE optional ist.

Der Knoten HUB2 beinhaltet einen Detektor DET1, um Störungen in den vom Nachbarknoten HUB1 empfangenen Signalen zu detektieren, und einen durch den Detektor DET1 ansteuerbaren Schalter S1, um die vom Nachbarknoten HUB1 empfangenen Signale zum anderen Nachbarknoten HUB3 und in die dritte Richtung, d.h. zum Koaxialkabelnetz, weiterzuleiten und im Falle einer detektierten Störung in den vom Nachbarknoten HUB1 empfangenen Signale die vom anderen Nachbarknoten HUB3 empfangenen Signale zum einen Nachbarknoten und in die dritte Richtung weiterzuleiten.

Der Knoten HUB2 hat einen ersten Eingang und einen ersten Ausgang, die mit dem Nachbarknoten HUB1 verbunden sind, sowie einen zweiten Eingang und einen zweiten Ausgang, die mit dem Nachbarknoten HUB3 verbunden sind. Der Schalter S1 ist als optischer Schalter ausgeführt. Der erste Eingang ist über eine Serienschaltung aus einem optischen Koppler K1, dem Schalter S1, einem optischen Splitter SP1 und einem weiteren, ebenfalls durch den Detektor DET1 ansteuerbaren optischen Schalter S2 mit dem zweiten Ausgang verbunden ist. Ein Ausgang des optischen Kopplers K1 liefert das Eingangssignal für den Detektor DET1. Der zweite Eingang ist mit dem Schalter S1 verbunden, und der erste Ausgang mit dem weiteren optischen Schalter S2.

In einer bevorzugten Ausführungsform ist zwischen Schalter S1 und optischen Splitter SP1 ein optischer Verstärker AMP geschaltet, um die weiterzuleitenden Signale zu verstärken. Der Knoten HUB2, HUB3, HUB4, HUB5 weist mindestens einen dritten Ausgang auf, um Signale mindestens in die dritte Richtung weiterleiten zu können. Der optische Splitter SP1 dupliziert die verstärkten Signale mindestens einmal, wobei ein Ausgangssignal des optischen Splitters SP1 dem weiteren Schalter S2 und ein weiteres Ausgangssignal des optischen Splitters SP1 dem dritten Ausgang des Knotens HUB2 zugeführt werden.

Im optischen Koppler K1 werden z.B. 10% des Signalpegels der vom Knoten HUB1 empfangenen Signale ausgekoppelt und dem Detektor DET1 zugeführt, der detektiert, ob der ausgekoppelte Signalpegel einen vorgegebenen Wert übersteigt oder unterschreitet. Wird der vorgegebene Wert überschritten, so steuert der Detektor die Schalter S1 und S2 derart an, daß die vom Knoten HUB1 empfangenen Signale über den Verstärker und den optischen Splitter SP1 zum Knoten HUB3 und zum dritten Ausgang, d.h. ins Koaxialkabelnetz, weitergeleitet werden. Der optische Splitter SP1 ist beispielsweise als 2x2 Koppler ausgeführt, dessen eines Ausgangssignal dem Schalter S2 und dessen anderes Ausgangssignal dem dritten Ausgang zuführt wird. Zwischen optischen Splitter SP1 und dritten Ausgang kann auch ein weiterer optischer Splitter SP2 geschaltet sein, der z.B. ebenfalls als 2x2 Koppler ausgeführt ist. Auf diese Weise können zwei separate Koaxialkabelnetze versorgt werden.

Für den Fall, daß der vorgegebene Wert im Detektor DET1 unterschritten wird, steuert der Detektor DET1 die Schalter S1 und S2 derart an, daß die vom Knoten HUB3 empfangenen Signale über den Verstärker AMP und den optischen Splitter SP1 sowie gegebenenfalls den optischen Splitter SP2 geleitet werden.

Der Knoten HUB2 beinhaltet in einer weiteren bevorzugten Ausführungsform einen weiteren optischen Koppler, einen weiteren Detektor und eine Steuereinheit, wobei die drei Elemente aus Gründen der Übersichtlichkeit nicht dargestellt sind. Der weitere optische Koppler ist zwischen den zweiten Eingang des Knotens HUB2 und den Schalter S1 geschaltet, damit ein Ausgang des weiteren optischen Kopplers das Eingangssignal für den weiteren Detektor liefert. Der weitere Detektor ist vorgesehen, um Störungen in den vom Nachbarknoten HUB3 empfangenen Signalen zu detektieren. Die Steuereinheit ist zwischen die beiden Detektoren und die beiden Schalter geschaltet, um in Abhängigkeit von den Ausgangssignalen der beiden Detektoren die beiden Schalter nach einer vorgegebenen Schaltmatrix anzusteuern, vergleichbar zum Knoten aus Fig. 4.

Das dritte Ausführungsbeispiel wird nun unter Zuhilfenahme der Figur 6 erläutert. Fig. 6 zeigt einen erfindungsgemäßen Knoten HUB2. Der erfindungsgemäße Knoten HUB2 dient zur Verwendung im Netzwerk aus Fig. 1. Der Aufbau der Knoten HUB3, HUB4, HUB5 ist vergleichbar demjenigen von HUB2. Der Aufbau der Knoten HUB1, HUB6 ist ebenfalls vergleichbar demjenigen von Knoten HUB2 mit dem Unterschied, daß die Verbindung vom jeweiligen Knoten zur Zentrale HE optional ist.

Der Knoten HUB2 beinhaltet einen Detektor DET1, um Störungen in den vom Nachbarknoten HUB1 empfangenen Signalen zu detektieren, und einen durch den Detektor DET1 ansteuerbaren Schalter S1, um die vom Nachbarknoten HUB1 empfangenen Signale in die dritte Richtung, d.h. zum Koaxialkabelnetz, weiterzuleiten und im Falle einer detektierten Störung in den vom Nachbarknoten HUB1 empfangenen Signale die vom Nachbarknoten HUB3 empfangenen Signale in die dritte Richtung weiterzuleiten.

Der Knoten HUB2 hat einen ersten Eingang und einen ersten Ausgang, die mit dem Nachbarknoten HUB1 verbunden sind, und einen zweiten Eingang und einen zweiten Ausgang, die mit dem Nachbarknoten HUB3 verbunden sind. Der Knoten hat mindestens einen dritten Ausgang, um Signale mindestens in die dritte Richtung weiterleiten zu können. Der Schalter S1 ist als optischer Schalter ausgeführt. Der erste Eingang ist über eine Serienschaltung aus einem optischen Koppler K1 und einem optischen Splitter SP1 mit dem zweiten Ausgang verbunden. Ein Ausgang des optischen Kopplers K1 liefert das Eingangssignal für den Detektor DET1. Der zweite Eingang ist über einen weiteren optischen Splitter SP3 mit dem ersten Ausgang verbunden. Jeweils ein Ausgang der optischen Splitter SP1, SP3 ist mit dem Schalter S1 verbunden. Der Schalter S1 ist mit dem dritten Ausgang verbunden.

In einer bevorzugten Ausführungsform ist zwischen Schalter S1 und dritten Ausgang ein optischer Verstärker AMP geschaltet ist, um die weiterzuleitenden Signale zu verstärken. Ein weiterer optischer Splitter SP2 ist vorgesehen, der zwischen Verstärker AMP und dritten Ausgang geschaltet ist, um die verstärkten Signale mindestens einmal zu duplizieren und eines der duplizierten Signale einem vierten Ausgang zuzuführen.

Der Detektor DET1 detektiert den durch den Koppler K1 ausgekoppelten Signalpegel und vergleicht ihn mit einer vorgegebenen Schwelle. Liegt der Signalpegel oberhalb der Schwelle, so steuert der Detektor DET1 den Schalter S1 derart an, daß die über den optischen Splitter SP1, z.B. ein 2x2 Koppler, dem Schalter S1 zugeführten Signale dem Koaxialkabelnetz über den dritten Ausgang zugeführt werden. Liegt der Signalpegel unterhalb der Schwelle, so steuert der Detektor DET1 den Schalter S1 derart an, daß die über den optischen Splitter SP3, z.B. ein 2x2 Koppler, dem Schalter S1 zugeführten Signale dem Koaxialkabelnetz über den dritten Ausgang zugeführt werden. Es kann auch ein weiterer optischer Splitter SP2 vorgesehen sein, um die vom Schalter S1 weitergeleiteten Signale gleichzeitig zwei Ausgängen zuzuleiten, dem dritten und einem vierten. Des weiteren kann dem Schalter S1 ein Verstärker AMP nachgeschaltet werden, um die in das nachfolgende Koaxialkabelnetz oder die nachfolgenden Koaxialkabelnetze zu übertragenden Signale zu verstärken.

In einer weiteren bevorzugten Ausführungsform beinhaltet der Knoten HUB2 einen weiteren optischen Koppler, einen weiteren Detektor und eine Steuereinheit, die allesamt aus Gründen der Übersichtlichkeit nicht dargestellt sind. Der weitere optische Koppler ist zwischen den zweiten Eingang des Knotens HUB2 und den weiteren optischen Splitter SP3 geschaltet, damit ein Ausgang des weiteren optischen Kopplers das Eingangssignal für den weiteren Detektor liefert. Der weitere Detektor ist vorgesehen ist, um Störungen in den vom Nachbarknoten HUB3 empfangenen Signalen zu detektieren. Die Steuereinheit ist zwischen die beiden Detektoren und den Schalter S1 geschaltet, um in Abhängigkeit von den Ausgangssignalen der Detektoren den Schalter S1 nach einer vorgegebenen Schaltmatrix anzusteuern, vergleichbar dem Knoten aus Fig. 4.

Bei allen drei Ausführungsbeispielen werden die Reserveleitungen ausschließlich für die Übertragung von von der Zentrale ausgesandten Signalen genutzt. Im fehlerfreien Fall werden alle Knoten über die jeweilige Hauptversorgungsleitung versorgt. Jede Reserveleitung hat daher im fehlerfreien Fall freie Kapazität, die auch für eine zusätzliche Datenübertragung genutzt werden. Jede Knoten beinhaltet beispielsweise einen dritten Eingang, einen fünften Ausgang und zwei weitere Schalter, die jeweils durch den Detektor DET1 angesteuert werden. Über den dritten Eingang können dem Knoten HUB4 z.B. zusätzliche Datensignale von einer Datenquelle zugeführt werden. Diese werden dann z.B. über Knoten HUB3 zum Knoten HUB2 übertragen, wo sie über seinen fünften Ausgang einer Datensenke zugeführt werden. Der erste weitere Schalter ist derart angeordnet, daß er gesteuert durch den Detektor DET1 im fehlerfreien Fall die über den dritten Eingang empfangenen zusätzlichen Datensignale zum ersten Ausgang weiterleitet und im Falle einer Störung auf der Hauptversorgungsleitung die Signale der Reserveleitung zum ersten Ausgang weiterleitet. Der zweite weitere Schalter ist derart angeordnet, daß er gesteuert durch den Detektor DET1 im fehlerfreien Fall die über den zweiten Eingang empfangenen zusätzlichen Datensignale zum fünften Ausgang weiterleitet und im Falle einer Störung auf der Hauptversorgungsleitung die Signale der Reserveleitung zum Schalter S1 weiterleitet.

Außerhalb des Knotens kann eine Auswertevorrichtung vorgesehen sein, die die vom fünften Ausgang empfangenen Datensignale zum dritten Eingang des Knotens weiterleitet, wenn die Datensignale z.B. für den übernächsten Nachbarknoten bestimmt sind, vergleiche obiges Beispiel: Knoten HUB3 als Relaisstation. Es kann auch ein dritter weiterer Schalter vorgesehen sein, der derart angeordnet ist, daß er gesteuert durch den Detektor DET1 im fehlerfreien Fall die über den zweiten Eingang empfangenen zusätzlichen Datensignale zum ersten Ausgang weiterleitet, wenn der Knoten als Relaisstation dienen soll, und im Falle einer Störung auf der Hauptversorgungsleitung geöffnet ist. Dann ist im Detektor eine Auswerteeinrichtung vorzusehen, die entscheidet, ob die über den zweiten Eingang empfangenen Datensignale im fehlerfreien Fall zum ersten oder zum fünften Ausgang weitergeleitet werden sollen.

## Patentansprüche

1. Knoten (HUB2, HUB3, HUB4, HUB5) eines Punkt-zu-Mehrpunkt-Netzwerkes (NET), das eine Zentrale (HE) beinhaltet, die geeignet ist, Signale zu zwei Anfangsknoten (HUB1, HUB6) zu übertragen, wobei die zwei Anfangsknoten (HUB1, HUB6) über eine Serienschaltung aus mehreren Knoten (HUB2, HUB3, HUB4, HUB5) miteinander verbunden sind, wobei der Knoten (HUB2, HUB3, HUB4, HUB5) geeignet ist, von seinen beiden Nachbarknoten (HUB1, HUB3; HUB2, HUB4; HUB3, HUB5; HUB4, HUB6) mit denen er verbunden ist, Signale zu empfangen und Signale zu seinen beiden Nachbarknoten (HUB1, HUB3; HUB2, HUB4; HUB3, HUB5; HUB4, HUB6) sowie in eine dritte Richtung zu übertragen, wobei der Knoten (HUB2, HUB3, HUB4, HUB5) einen Detektor (DET1) beinhaltet, um Störungen in den vom einen Nachbarknoten (HUB1; HUB2; HUB5; HUB6) empfangenen Signalen zu detektieren, wobei der Knoten (HUB2, HUB3, HUB4, HUB5) einen durch den Detektor (DET1) ansteuerbaren Schalter (S1) beinhaltet, um die vom einen Nachbarknoten (HUB1; HUB2; HUB5; HUB6) empfangenen Signale zum anderen Nachbarknoten (HUB3; HUB4; HUB3; HUB4) und/oder in die dritte Richtung weiterzuleiten und im Falle einer detektierten Störung in den vom einen Nachbarknoten (HUB1; HUB2; HUB5; HUB6) empfangenen Signalen die vom anderen Nachbarknoten (HUB3; HUB4; HUB3; HUB4) empfangenen Signale zum einen Nachbarknoten (HUB1; HUB2; HUB5; HUB6) und/oder in die dritte Richtung weiterzuleiten, wobei die Zentrale (HE) über optische Leitungen mit den zwei Anfangsknoten (HUB1, HUB6) verbunden ist, und die mehreren Knoten (HUB2, HUB3, HUB4, HUB5) über optische Leitungen mit ihren Nachbarknoten (HUB1, HUB3; HUB2, HUB4; HUB3, HUB5; HUB4, HUB6) verbunden sind, **dadurch gekennzeichnet, daß** der Knoten (HUB2, HUB3, HUB4, HUB5) einen ersten Eingang und einen ersten Ausgang aufweist, die mit dem einen Nachborknoten (HUB1; HUB2; HUB5; HUB6) verbunden sind, daß der Knoten (HUB2, HUB3, HUB4, HUB5) einen zweiten Eingang und einen zweiten Ausgang aufweist, die mit dem anderen Nachbarknoten (HUB3; HUB4; HUB3; HUB4) verbunden sind, daß der Schalter (S1) als optischer Schalter ausgeführt ist, daß der erste Eingang über eine Serienschaltung aus einem optischen Koppler (K1), dem Schalter (S1) und einem optischen Splitter (SP1) mit dem zweiten Ausgang verbunden ist, daß ein Ausgang des optischen Kopplers (K1) das Eingangssignal für den Detektor (DET1) liefert, daß der zweite Eingang mit dem Schalter (S1) verbunden ist, und daß der erste Ausgang mit dem optischen Splitter (SP1) verbunden ist.

2. Knoten (HUB2, HUB3, HUB4, HUB5) nach Anspruch 1, **dadurch gekennzeichnet, daß** zwischen Schalter (S1) und optischen Splitter (SP1) ein optischer Verstärker (AMP) geschaltet ist, um die weiterzuleitenden Signale zu verstärken, daß der Knoten (HUB2, HUB3, HUB4, HUB5) mindestens einen dritten Ausgang aufweist, um Signale mindestens in die dritte Richtung weiterleiten zu können, und daß der optische Splitter (SP1) die verstärkten Signale mindestens zweimal dupliziert, wobei jeweils ein Ausgangssignal des optischen Splitters (SP1) jeweils einem Ausgang des Knotens (HUB2, HUB3, HUB4, HUB5) zugeführt wird.

3. Knoten (HUB2, HUB3, HUB4, HUB5) noch Anspruch 1, **dadurch gekennzeichnet, daß** der Knoten (HUB2, HUB3, HUB4, HUB5) einen ersten Eingang und einen ersten Ausgang aufweist, die mit dem einen Nachbarknoten (HUB1; HUB2; HUB5; HUB6) verbunden sind, daß der Knoten (HUB2, HUB3, HUB4, HUB5) einen zweiten Eingang und einen zweiten Ausgang aufweist, die mit dem anderen Nachbarknoten (HUB3; HUB4; HUB3; HUB4) verbunden sind, daß der Schalter (S1) als optischer Schalter ausgeführt ist, daß der erste Eingang über eine Serienschaltung aus einem optischen Koppler (K1), dem Schalter (S1), einem optischen Splitter (SP1) und einem weiteren, ebenfalls durch den Detektor (DET2) ansteuerbaren optischen Schalter (S2) mit dem zweiten Ausgang verbunden ist, daß ein Ausgang des optischen Kopplers (K1) das Eingangssignal für den Detektor (DET1) liefert, daß der zweite Eingang mit dem Schalter (S1) verbunden ist, und daß der erste Ausgang mit dem weiteren optischen Schalter (S2) verbunden ist.

4. Knoten (HUB2, HUB3, HUB4, HUB5) nach Anspruch 3, **dadurch gekennzeichnet, daß** zwischen Schalter (S1) und optischen Splitter (SP1) ein optischer Verstärker (AMP) geschaltet ist, um die weiterzuleitenden Signale zu verstärken, daß der Knoten (HUB2, HUB3, HUB4, HUB5) mindestens einen dritten Ausgang aufweist, um Signale mindestens in die dritte Richtung weiterleiten zu können, und daß der optische Splitter (SP1) die verstärkten Signale mindestens einmal dupliziert, wobei ein Ausgangssignal des optischen Splitters (SP1) dem weiteren Schalter (S2) und ein weiteres Ausgangssignal des optischen Splitters (SP1) dem dritten Ausgang des Knotens (HUB2, HUB3, HUB4, HUB5) zugeführt werden.

5. Knoten (HUB2, HUB3, HUB4, HUB5) nach Anspruch 1, **dadurch gekennzeichnet, daß** der Knoten (HUB2, HUB3, HUB4, HUB5) einen ersten Eingang und einen ersten Ausgang aufweist, die mit dem einen Nachbarknoten (HUB1; HUB2; HUB5; HUB6) verbunden sind, daß der Knoten (HUB2, HUB3, HUB4, HUB5) einen zweiten Eingang und einen zweiten Ausgang aufweist, die mit dem anderen Nachbarknoten (HUB3; HUB4; HUB3; HUB4) verbunden sind, daß der Knoten (HUB2, HUB3, HUB4, HUB5) mindestens einen dritten Ausgang aufweist, um Signale mindestens in die dritte Richtung weiterleiten zu können, daß der Schalter (S1) als optischer Schalter ausgeführt ist, daß der erste Eingang über eine Serienschaltung aus einem optischen Koppler (K1) und einem optischen Splitter (SP1) mit dem zweiten Ausgang verbunden ist, daß ein Ausgang des optischen Kopplers (K1) das Eingangssignal für den Detektor (DET1) liefert, daß der zweite Eingang über einen weiteren optischen Splitter (SP3) mit dem ersten Ausgang verbunden ist, daß jeweils ein Ausgang der optischen Splitter (SP1, SP3) mit dem Schalter (S1) verbunden ist, und daß der Schalter (S1) mit dem dritten Ausgang verbunden ist.

6. Knoten (HUB2, HUB3, HUB4, HUB5) nach Anspruch 5, **dadurch gekennzeichnet, daß** zwischen Schalter (S1) und dritten Ausgang ein optischer Verstärker (AMP) geschaltet ist, um die weiterzuleitenden Signale zu verstärken, und daß ein weiterer optischer Splitter (SP2) vorgesehen ist, der zwischen Verstärker (AMP) und dritten Ausgang geschaltet ist, um die verstärkten Signale mindestens einmal zu duplizieren und eines der duplizierten Signale einem vierten Ausgang zuzuführen.

7. Knoten (HUB2, HUB3, HUB4, HUB5) nach einem der Ansprüche 2, 4 oder 6, **dadurch gekennzeichnet, daß** der Knoten (HUB2, HUB3, HUB4, HUB5) einen weiteren optischen Koppler (K2), einen weiteren Detektor (DET2) und eine Steuereinheit (CTRL) beinhaltet, daß der weitere optische Koppler (K2) zwischen den zweiten Eingang des Knotens (HUB2, HUB3, HUB4, HUB5) und den Schalter (S1) geschaltet ist, damit ein Ausgang des weiteren optischen Kopplers (K2) das Eingangssignal für den weiteren Detektor (DET2) liefert, daß der weitere Detektor (DET2) vorgesehen ist, um Störungen in den vom anderen Nachbarknoten (HUB3; HUB4; HUB3; HUB4) empfangenen Signalen zu detektieren, und daß die Steuereinheit (CTRL) zwischen die beiden Detektoren (DET1, DET2) und den Schalter (S1) geschaltet ist, um in Abhängigkeit von den Ausgangssignalen der Detektoren (DET1, DET2) den Schalter (S1) nach einer vorgegebenen Schaltmatrix anzusteuern.

8. Knoten (HUB2, HUB3, HUB4, HUB5) nach einem der Ansprüche 1, 3 oder 5, **dadurch gekennzeichnet, daß** der Knoten (HUB2, HUB3, HUB4, HUB5) einen weiteren Eingang, einen weiteren Ausgang und zwei weitere Schalter beinhaltet, daß der erste weitere Schalter derart angeordnet ist, daß er gesteuert durch den Detektor (DET1) im fehlerfreien Fall die über den weiteren Eingang empfangenen Signale zum ersten Ausgang weiterleitet und im Falle einer detektierten Störung die über den zweiten Eingang empfangenen Signale zum ersten Ausgang weiterleitet, und daß der zweite weitere Schalter derart angeordnet ist, daß er gesteuert durch den Detektor (DET1) im fehlerfreien Fall die über den zweiten Eingang empfangenen Signale zum weiteren Ausgang weiterleitet und im Falle einer detektierten Störung die über den zweiten Eingang empfangenen Signale zum Schalter (S1) weiterleitet.

## Claims

1. Node (HUB2, HUB3, HUB4, HUB5) of a point-to-multipoint network (NET) containing a centre (HE) suitable for transmitting signals to two initial nodes (HUB1, HUB6), the two initial nodes (HUB1, HUB6) being connected to each other via a series connection of a plurality of nodes (HUB2, HUB3, HUB4, HUB5), the node (HUB2, HUB3, HUB4, HUB5) being suitable for receiving signals from its two adjacent nodes (HUB1, HUB3; HUB2, HUB4; HUB3, HUB5; HUB4, HUB6) to which it is connected, and for transmitting signals to its two adjacent nodes (HUB1, HUB3; HUB2, HUB4; HUB3, HUB5; HUB4, HUB6) and in a third direction, the node (HUB2, HUB3, HUB4, HUB5) containing a detector (DET1) for detecting disturbances in the signals received from one (HUB1; HUB2; HUB5; HUB6) of its adjacent nodes, the node (HUB2, HUB3, HUB4, HUB5) further containing a switch (S1) controllable by the detector (DET1) to route the signals received from said one adjacent node (HUB1; HUB2; HUB5; HUB6) to the other adjacent node (HUB3; HUB4; HUB3; HUB4) and/or in the third direction, and, if a disturbance is detected in the signals received from said one adjacent node (HUB1; HUB2; HUB5; HUB6), to route the signals received from the other adjacent node (HUB3; HUB4; HUB3; HUB4) to said one adjacent node (HUB1; HUB2; HUB5; HUB6) and/or in the third direction, the centre (HE) being connected over optical lines to the two initial nodes HUB1, HUB6, and the plurality of nodes (HUB2, HUB3, HUB4, HUB5) being connected over optical lines to their adjacent nodes (HUB1, HUB3; HUB2, HUB4; HUB3, HUB5; HUB4, HUB6), **characterized in that** the node (HUB2, HUB3, HUB4, HUB5) has a first input and a first output, which are connected to the one adjacent node (HUB1; HUB2; HUB5; HUB6), that the node (HUB2, HUB3, HUB4, HUB5) has a second input and a second output, which are connected to the other adjacent node (HUB3; HUB4; HUB3; HUB4), that the switch (S1) is implemented as an optical switch, that the first input is connected to the second output via a series connection of an optical coupler (K1), the switch (S1), and an optical splitter (SP1), that an output of the optical coupler (K1) supplies the input signal for the detector (DET1), that the second input is connected to the switch (S1), and that the first output is connected to the optical splitter (SP1).

2. Node (HUB2, HUB3, HUB4, HUB5) according to Claim 1, **characterized in that** an optical amplifier (AMP) is connected between the switch (S1) and the optical splitter (SP1) to amplify the signals to be forwarded, that the node (HUB2, HUB3, HUB4, HUB5) has at least a third output for transmitting signals in at least the third direction, and that the optical splitter (SP1) duplicates the amplified signals at least twice, with each of its output signals being passed to a respective output of the node (HUB2, HUB3, HUB4, HUB5).

3. Node (HUB2, HUB3, HUB4, HUB5) according to Claim 1, **characterized in that** the node (HUB2, HUB3, HUB4, HUB5) has a first input and a first output which are connected to said one adjacent node (HUB1; HUB2; HUB5; HUB6), that the node (HUB2, HUB3, HUB4, HUB5) has a second input and a second output which are connected to the other adjacent node (HUB3; HUB4; HUB3; HUB4), that the switch (S1) is implemented as an optical switch, that the first input is connected to the second output via a series connection of an optical coupler (K1), the switch (S1), an optical splitter (SP1), and a further optical switch (S2) likewise controllable by the detector (DET2), that one output of the optical coupler (K1) supplies the input signal for the detector (DET1), that the second input is connected to the switch (S1), and that the first output is connected to the further optical switch (S2).

4. Node (HUB2, HUB3, HUB4, HUB5) according to Claim 3, **characterized in that** an optical amplifier (AMP) is connected between the switch (S1) and the optical splitter (SP1) to amplify the signals to be forwarded, that the node (HUB2, HUB3, HUB4, HUB5) has at least a third output for forwarding signals in at least the third direction, and that the optical splitter (SP1) duplicates the amplified signals at least once, with one of its output signals being fed to the further switch (S2), and a further output signal of the optical splitter (SP1) being passed to the third output of the node (HUB2, HUB3, HUB4, HUB5).

5. Node (HUB2, HUB3, HUB4, HUB5) according to Claim 1, **characterized in that** the node (HUB2, HUB3, HUB4, HUB5) has a first input and a first output which are connected to said one adjacent node (HUB1; HUB2; HUB5; HUB6), that the node (HUB2, HUB3, HUB4, HUB5) has a second input and a second output which are connected to the other adjacent node (HUB3; HUB4; HUB3; HUB4),that the node (HUB2, HUB3, HUB4, HUB5) has at least a third output for transmitting signals in the third direction, that the switch (S1) is implemented as an optical switch, that the first input is connected to the second output via a series connection of an optical coupler (K1) and an optical splitter (SP1), that one output of the optical coupler (K1) supplies the input signal for the detector (DET1), that the second input is connected to the first output via a further optical splitter (SP3), that one output of each of the optical splitters (SP1, SP3) is connected to the switch (S1), and that the switch (S1) is connected to the third output.

6. Node (HUB2, HUB3, HUB4, HUB5) according to Claim 5, **characterized in that** an optical amplifier (AMP) is connected between the switch (S1) and the third output to amplify the signals to be forwarded, and that a further optical splitter (SP2) is provided which is connected between the optical amplifier (AMP) and the third output to duplicate the amplified signals at least once and to pass one of the duplicated signals to a fourth output.

7. Node (HUB2, HUB3, HUB4, HUB5) according to one of Claims 2, 4 or 6, **characterized in that** the node (HUB2, HUB3, HUB4, HUB5) includes a further optical coupler (K2), a further detector (DET2), and a control unit (CTRL), that the further optical coupler (K2) is connected between the second input of the node (HUB2, HUB3, HUB4, HUB5) and the switch (S1) so that one output of the further optical coupler (K2) provides the input signal for the further detector (DET2), that the further detector (DET2) is provided for detecting disturbances in the signals received from the other adjacent node (HUB3; HUB4; HUB3; HUB4), and that the control unit (CTRL) is connected between the two detectors (DET1, DET2) and the switch (S1) to activate the switch (S1) in accordance with the output signals from the detectors (DET1, DET2) using a predetermined switching matrix.

8. Node (HUB2, HUB3, HUB4, HUB5) according to one of Claims 1, 3 or 5, **characterized in that** the node (HUB2, HUB3, HUB4, HUB5) has a further input, a further output, and two further switches, that the first further switch is arranged such that under the control of the detector (DET1), in the trouble-free case it routes the signals received via the further input to the first output, and in the event of a detected disturbance it routes the signals received via the second input to the first output, and that the second further switch is arranged such that under the control of the detector (DET1), in the trouble-free case it routes the signals received via the second input to the further output, and in the event of a detected disturbance it routes the signals received via the second input to the switch (S1).

## Revendications

1. Noeud (HUB2, HUB3, HUB4, HUB5) d'un réseau (NET) point à multipoint comprenant une centrale (HE) conçue pour transmettre des signaux vers deux noeuds de départ (HUB1, HUB6), sachant que les deux noeuds de départ (HUB1, HUB6) sont reliés entre eux par l'intermédiaire d'un montage en série constitué de plusieurs noeuds (HUB2, HUB3, HUB4, HUB5), sachant que chacun des noeuds (HUB2, HUB3, HUB4, HUB5) est conçu pour recevoir des signaux en provenance de ses deux noeuds voisins (HUB1, HUB3 ; HUB2, HUB4 ; HUB3, HUB5 ; HUB4, HUB6) auxquels il est relié, et pour transmettre des signaux à ses deux noeuds voisins (HUB1, HUB3 ; HUB2, HUB4 ; HUB3, HUB5 ; HUB4, HUB6) ainsi que dans une troisième direction, sachant que le noeud (HUB2, HUB3, HUB4, HUB5) contient un détecteur (DET1) permettant de détecter des dysfonctionnements dans les signaux reçus en provenance d'un noeud voisin (HUB1 ; HUB2 ; HUB5 ; HUB6), sachant que le noeud (HUB2, HUB3, HUB4, HUB5) contient un commutateur (S1), contrôlable par le détecteur (DET1), permettant de transmettre les signaux reçus en provenance d'un noeud voisin (HUB1 ; HUB2 ; HUB5 ; HUB6) à un autre noeud voisin (HUB3 ; HUB4 ; HUB3 ; HUB4) et/ou dans une troisième direction et, en cas de détection d'un dysfonctionnement dans les signaux reçus en provenance d'un noeud voisin (HUB1 ; HUB2 ; HUB5 ; HUB6), de transmettre les signaux reçus en provenance de l'autre noeud voisin (HUB3 ; HUB4 ; HUB3 ; HUB4) à un des noeuds voisins (HUB1, HUB2, HUB5, HUB6) et/ou dans la troisième direction, sachant que la centrale (HE) est reliée aux deux noeuds de départ (HUB1, HUB6) par l'intermédiaire de lignes optiques et que les différents noeuds (HUB2, HUB3, HUB4, HUB5) sont reliés à leurs noeuds voisins (HUB1, HUB3; HUB2, HUB4; HUB3, HUB5 ; HUB4, HUB6) par l'intermédiaire de lignes optiques, **caractérisé en ce que** le noeud (HUB2, HUB3, HUB4, HUB4, HUB5) présente une première entrée et une première sortie qui sont reliées à l'un des noeuds voisins (HUB1 ; HUB2 ; HUB5; HUB6), que le noeud (HUB2, HUB3, HUB4, HUB5) présente une deuxième entrée et une deuxième sortie qui sont reliées à l'autre noeud voisin (HUB3 ; HUB4 ; HUB3 ; HUB4), que le commutateur (S1) est conçu comme un commutateur optique, que la première entrée est reliée à la deuxième sortie par l'intermédiaire d'un montage en série constitué d'un coupleur optique (K1), du commutateur (S1) et d'un répartiteur optique (SP1), qu'une sortie du coupleur optique (K1) fournit le signal d'entrée pour le détecteur (DET1), que la deuxième entrée est reliée au commutateur (S1), et que la première sortie est reliée au répartiteur optique (SP1).

2. Noeud (HUB2, HUB3, HUB4, HUB5) selon la revendication 1, **caractérisé en ce qu'**un amplificateur optique (AMP) est monté entre le commutateur (S1) et le répartiteur optique (SP1) pour amplifier les signaux à transmettre, que le noeud (HUB2, HUB3, HUB4, HUB5) présente au moins une troisième sortie permettant de transmettre des signaux au moins dans la troisième direction, et que le répartiteur optique (SP1) divise au moins deux fois les signaux amplifiés, sachant que respectivement un signal de sortie du répartiteur optique (SP1) est conduit vers respectivement une sortie du noeud (HUB2, HUB3, HUB4, HUB5).

3. Noeud (HUB2, HUB3, HUB4, HUB5) selon la revendication 1, **caractérisé en ce que** le noeud (HUB2, HUB3, HUB4, HUB5) présente une première entrée et une première sortie qui sont reliées à l'un des noeuds voisins (HUB1 ; HUB2 ; HUB5 ; HUB6), que le noeud (HUB2, HUB3, HUB4, HUB5) présente une deuxième entrée et une deuxième sortie qui sont reliées à l'autre noeud voisin (HUB3 ; HUB4 ; HUB3 ; HUB4), que le commutateur (S1) est conçu comme un commutateur optique, que la première entrée est reliée à la deuxième sortie par l'intermédiaire d'un montage en série constitué d'un coupleur optique (K1), du commutateur (S1), d'un répartiteur optique (SP1) et d'un autre commutateur optique (S2) également contrôlable par le détecteur (DET2), qu'une sortie du coupleur optique (K1) fournit le signal d'entrée pour le détecteur (DET1), que la deuxième entrée est reliée au commutateur (S1), et que la première sortie est reliée au deuxième commutateur optique (S2).

4. Noeud (HUB2, HUB3, HUB4, HUB5) selon la revendication 3, **caractérisé en ce qu'**un amplificateur optique (AMP) est monté entre le commutateur (S1) et le répartiteur optique (SP1) pour amplifier les signaux à transmettre, que le noeud (HUB2, HUB3, HUB4, HUB5) présente au moins une troisième sortie permettant de transmettre des signaux au moins dans la troisième direction, et que le répartiteur optique (SP1) divise au moins une fois les signaux amplifiés, sachant qu'un signal de sortie du répartiteur optique (SP1) est conduit vers le deuxième commutateur (S2) et qu'un autre signal de sortie du répartiteur optique (SP1) est conduit vers la troisième sortie du noeud (HUB2, HUB3, HUB4, HUB5).

5. Noeud (HUB2, HUB3, HUB4, HUB5) selon la revendication 1, **caractérisé en ce que** le noeud (HUB2, HUB3, HUB4, HUB5) présente une première entrée et une première sortie qui sont reliées à l'un des noeuds voisins (HUB1 ; HUB2 ; HUB5 ; HUB6), que le noeud (HUB2, HUB3, HUB4, HUB5) présente une deuxième entrée et une deuxième sortie qui sont reliées à l'autre noeud voisin (HUB3 ; HUB4 ; HUB3 ; HUB4), que le noeud (HUB2, HUB3, HUB4, HUB5) présente au moins une troisième sortie permettant de transmettre des signaux au moins dans la troisième direction, que le commutateur (S1) est conçu comme un commutateur optique, que la première entrée est reliée à la deuxième sortie par l'intermédiaire d'un montage en série constitué d'un coupleur optique (K1) et d'un répartiteur optique (SP1), qu'une sortie du coupleur optique (K1) fournit le signal d'entrée pour le détecteur (DET1), que la deuxième entrée est reliée à la première sortie par l'intermédiaire d'un répartiteur optique supplémentaire (SP3), que respectivement une sortie du répartiteur optique (SP1, SP3) est reliée au commutateur (S1), et que le commutateur (S1) est relié à la troisième sortie.

6. Noeud (HUB2, HUB3, HUB4, HUB5) selon la revendication 5, **caractérisé en ce qu'**un amplificateur optique (AMP) est monté entre le commutateur (S1) et la troisième sortie pour amplifier les signaux à transmettre, et qu'un répartiteur optique supplémentaire (SP2), monté entre l'amplificateur (AMP) et la troisième sortie, est prévu pour diviser au moins une fois les signaux amplifiés et transmettre un des signaux divisés à une quatrième sortie.

7. Noeud (HUB2, HUB3, HUB4, HUB5) selon une des revendications 2, 4 ou 6, **caractérisé en ce que** le noeud (HUB2, HUB3, HUB4, HUB5) contient un coupleur optique supplémentaire (K2), un détecteur supplémentaire (DET2) et une unité de commande (CTRL), que le coupleur optique supplémentaire (K2) est monté entre la deuxième entrée du noeud (HUB2, HUB3, HUB4, HUB5) et le commutateur (S1), afin qu'une sortie du coupleur optique supplémentaire (K2) fournisse le signal d'entrée pour le détecteur supplémentaire (DET2), que le détecteur supplémentaire (DET2) est prévu pour détecter les dysfonctionnements se produisant dans les signaux reçus en provenance de l'autre noeud voisin (HUB3 ; HUB4 ; HUB3 ; HUB4), et que l'unité de commande (CTRL) est montée entre les deux détecteurs (DET1, DET2) et le commutateur (S1) pour commander, en fonction des signaux de sortie des détecteurs (DET1, DET2), le commutateur (S1) selon une matrice de commutation prédéfinie.

8. Noeud (HUB2, HUB3, HUB4, HUB5) selon une des revendications 1, 3 ou 5, **caractérisé en ce que** le noeud (HUB2, HUB3, HUB4, HUB5) présente une entrée et une sortie supplémentaires et deux commutateurs supplémentaires, que le premier commutateur supplémentaire est disposé de telle manière que, commandé par le détecteur (DET1), il transmet, lorsqu'aucun dysfonctionnement n'est détecté, les signaux reçus par l'intermédiaire de l'entrée supplémentaire vers la première sortie, et, en cas de détection d'un dysfonctionnement, les signaux reçus par l'intermédiaire de la deuxième entrée vers la première sortie, et que le deuxième commutateur supplémentaire est disposé de telle manière que, commandé par le détecteur DET1, il transmet, lorsqu'aucun dysfonctionnement n'est détecté, les signaux reçus par l'intermédiaire de la deuxième entrée vers la sortie supplémentaire, et, en cas de détection d'un dysfonctionnement, les signaux reçus par l'intermédiaire de la deuxième entrée vers le commutateur (S1).
